# EUROPEAN PATENT APPLICATION

(11) **EP 4 810 654 A1**
(43) Date of publication of application: **23.09.2026**
(21) Application number: 24912843.0
(22) Date of filing: 24.12.2024
(51) Int. Cl.: C23C 20/06

(54) **STAINLESS STEEL FOIL**

(30) Priority: 27.12.2023 JP 2023221973
(71) Applicant: NIPPON STEEL CHEMICAL & MATERIAL CO., LTD., Tokyo 103-0027 (JP)
(72) Inventor: YAMAGUCHI, Sawako, Tokyo 100-8071 (JP); HASHINO, Eiji, Tokyo 100-8071 (JP); HAGIWARA, Yoshiaki, Tokyo 103-0027 (JP); UNNO, Hiroto, Tokyo 103-0027 (JP)
(74) Representative: Zimmermann & Partner Patentanwälte mbB
(86) International application number: PCT/JP2024/045755
(87) International publication number: WO 2025/142957

(57) **Abstract**

A stainless steel foil that has excellent durability against bending stress is provided. A stainless steel foil according to the present disclosure includes a stainless steel substrate, and a siloxane polymer film formed on at least one surface of the stainless steel substrate. The siloxane polymer film includes a first region formed on a surface of the stainless steel substrate, and a second region formed on a surface of the first region. The first region contains, in atomic percent, Si: 5 to 30% and Fe: 5 to 45%.

## Description

### TECHNICAL FIELD

The present disclosure relates to a stainless steel foil, and more particularly relates to a stainless steel foil that can be applied as a material for a substrate of an electronic device.

### BACKGROUND ART

To date, resins and glass have been widely used as materials for substrates of electronic devices. In recent years, metal materials that are superior in heat resistance and gas barrier property compared to resin and are superior in toughness compared to glass have been attracting attention. On the other hand, materials for substrates of electronic devices also need to have flatness and insulating ability. Therefore, metal foils in which an insulation layer is formed have been proposed as materials for substrate of electronic devices.

Specifically, Japanese Patent Application Publication No. 2013-236029 (Patent Literature 1) proposes a substrate for semiconductor elements that has an alkali metal silicate layer formed by a liquid phase technique on a metallic substrate. In this substrate for semiconductor elements, a clad material in which one side or both sides of an aluminum, stainless steel, or steel sheet is integrated with an aluminum sheet is used as a metallic substrate, and the contact angle of water on the surface of the alkali metal silicate layer is 20 to 90°. Patent Literature 1 discloses that according to this substrate for semiconductor elements, formation of fine precipitates in the alkali metal silicate layer is suppressed, and thus water resistance can be ensured.

Further, Japanese Patent Application Publication No. 2003-247078 (Patent Literature 2) proposes a stainless steel foil that is coated on one surface or both surfaces with an inorganic-organic hybrid film, which has an inorganic three-dimensional network structure mainly composed of siloxane bonds as a skeleton and in which at least one bridging oxygen atom of the skeleton is replaced with an organic group and/or a hydrogen atom. Patent Literature 2 discloses that this stainless steel foil is excellent in properties such as heat resistance, workability, flatness, and insulating ability, and has flexibility when used as an electronic material substrate.

### CITATION LIST

### PATENT LITERATURE

Patent Literature 1: Japanese Patent Application Publication No. 2013-236029
Patent Literature 2: Japanese Patent Application Publication No. 2003-247078

### SUMMARY OF INVENTION

### TECHNICAL PROBLEM

In this connection, with the development of electronic equipment, there is a demand for materials that can be used in more severe environments than in the past. Specifically, for example, development of deformable thin electronic devices such as deformable displays, deformable transistors, deformable batteries, and deformable sensors has been progressing. Such deformable thin electronic devices are repeatedly subjected to bending stress during use. Therefore, a deformable thin electronic device is preferably less prone to cracks even when repeatedly subjected to bending stress.

Here, among metal foils, stainless steel foils have excellent durability against bending stress. Note that, the term "steel foil" as used in the present description means a steel sheet that has a thickness of 150 µm or less. Further, in the present description, the fact that cracks are less likely to occur even when repeatedly subjected to bending stress is also referred to as "has excellent durability against bending stress". That is, there is a growing need for a stainless steel foil in which an insulation layer is formed and which has excellent durability against bending stress.

The aforementioned Patent Literatures 1 and 2 propose metal foils in which an insulation layer is formed and which can be applied as substrates of electronic devices. On the other hand, in the aforementioned Patent Literatures 1 and 2, there is no discussion regarding increasing durability against bending stress to an extent that the metal foils can be applied to deformable thin electronic devices.

An objective of the present disclosure is to provide a stainless steel foil that has excellent durability against bending stress.

### SOLUTION TO PROBLEM

A stainless steel foil according to the present disclosure includes:
a stainless steel substrate, and
a siloxane polymer film formed on at least one surface of the stainless steel substrate,
wherein:
   the siloxane polymer film includes:
   a first region formed on a surface of the stainless steel substrate; and
   a second region formed on a surface of the first region, and
   the first region contains, in atomic percent:
      Si: 5 to 30% and Fe: 5 to 45%.

### ADVANTAGEOUS EFFECT OF INVENTION

A stainless steel foil according to the present disclosure has excellent durability against bending stress.

### DESCRIPTION OF EMBODIMENTS

The present inventors have conducted detailed studies pertaining to a stainless steel foil that has excellent durability against bending stress. As a result, the present inventors obtained the following finding.

First, the present inventors conducted studies regarding an insulation layer formed on a stainless steel substrate. Specifically, the present inventors have found that by forming a siloxane polymer film on a stainless steel substrate, not only insulating ability but also heat resistance and flatness can be imparted to a stainless steel foil. Further, in the case of deformable thin electronic devices, an insulation layer may sometimes be formed only on one surface of the substrate. Therefore, in a stainless steel foil according to the present embodiment, a siloxane polymer film is formed on at least one surface of a stainless steel substrate. Here, the term "siloxane polymer film" means a film composed of a polymer having siloxane bonds as a main skeleton.

On the other hand, even when a siloxane polymer film was formed in a stainless steel foil, in some cases the stainless steel foil did not have excellent durability against bending stress. Therefore, the present inventors investigated various techniques for increasing the durability against bending stress of a stainless steel foil in which a siloxane polymer film was formed. As a result, the present inventors obtained the following finding.

Specifically, the present inventors focused on the adhesion between the siloxane polymer film and the stainless steel substrate. Here, the siloxane polymer film is a film having siloxane bonds (Si-O-Si) as a main skeleton. On the other hand, chromium oxyhydroxide that is a passivation film is formed on the outermost surface of the stainless steel substrate. To date, it has been believed that the Cr element in the chromium oxyhydroxide forms Cr-O-Si bonds with the siloxane polymer film and thereby enhances the adhesion of the siloxane polymer film. It has been believed that it is likely that, as a result, durability against bending stress is obtained in a stainless steel foil in which a siloxane polymer film is formed.

Therefore, the present inventors considered that by further enhancing the adhesion between the siloxane polymer film and the stainless steel substrate, the durability of the stainless steel foil against bending stress could be further increased. As a result of detailed investigations conducted by the present inventors, it has been revealed that if a mixed layer in which Fe atoms are mixed can be formed in the siloxane polymer film, there is a possibility that the durability of the stainless steel foil against bending stress will be increased. Specifically, as a result of further detailed studies conducted by the present inventors, it has been revealed that if a region having, in atomic percent, a silicon (Si) content of 5 to 30% and an iron (Fe) content of 5 to 45% is formed in a siloxane polymer film, the occurrence of cracks in the siloxane polymer film can be suppressed.

More specifically, in the present description, in a siloxane polymer film, a region that contains, in atomic percent, Si: 5 to 30% and Fe: 5 to 45% is also referred to as a "first region". The first region is formed at an interface with the stainless steel substrate in the siloxane polymer film. That is, the first region is formed on a surface of the stainless steel substrate. Further, in the present description, in the siloxane polymer film, a region formed on the surface of the first region is referred to as a "second region". In short, the first region and the second region are both included in the siloxane polymer film, with the first region being formed on a surface of the stainless steel substrate, and the second region being formed on a surface of the first region. As a result, in the stainless steel foil according to the present embodiment, the occurrence of cracks in the siloxane polymer film is suppressed, and thus the stainless steel foil has excellent durability against bending stress.

The reason why the durability of the stainless steel foil against bending stress is increased by the first region being formed on a surface of the stainless steel substrate, and the second region being formed on the surface of the first region has not been clarified in detail. However, the fact that the durability of a stainless steel foil against bending stress is increased by a first region containing, in atomic percent, Si: 5 to 30% and Fe: 5 to 45% being formed on a surface of the stainless steel substrate, and a second region being formed on a surface of the first region has been demonstrated by examples that are described later.

The gist of the stainless steel foil according to the present embodiment, which was completed based on the above findings, is as follows.
[1] A stainless steel foil, including:
   a stainless steel substrate, and
   a siloxane polymer film formed on at least one surface of the stainless steel substrate,
   wherein:
      the siloxane polymer film includes:
      a first region formed on a surface of the stainless steel substrate; and
      a second region formed on a surface of the first region, and
      the first region contains, in atomic percent:
         Si: 5 to 30% and Fe: 5 to 45%.
[2] The stainless steel foil according to [1], wherein:
   a thickness of the first region is 2 to 100 nm.
[3] The stainless steel foil according to [1], wherein:
   a thickness of the siloxane polymer film is 0.3 to 5.0 µm.
[4] The stainless steel foil according to [2], wherein:
   a thickness of the siloxane polymer film is 0.3 to 5.0 µm.
[5] The stainless steel foil according to any one of [1] to [4], wherein:
   a thickness of the stainless steel substrate is 5 to 80 µm.

Hereinafter, the stainless steel foil according to the present embodiment will be described.

### [Stainless steel foil]

The stainless steel foil according to the present embodiment includes a stainless steel substrate, and a siloxane polymer film formed on at least one surface of the stainless steel substrate. Here, the stainless steel foil according to the present embodiment may also include another structure in addition to the stainless steel substrate and the siloxane polymer film. For example, the stainless steel foil according to the present embodiment may have another film on the siloxane polymer film. For example, furthermore, among the surfaces of the stainless steel substrate, the stainless steel substrate may have another film on a surface on which the siloxane polymer film is not formed. The other film, for example, may be a resin film, or may be a film which is mainly composed of an inorganic compound.

### [Stainless steel substrate]

It suffices that the stainless steel substrate according to the present embodiment is a substrate composed of stainless steel. That is, in the present embodiment, the type of stainless steel constituting the stainless steel substrate is not particularly limited. The stainless steel, for example, may be ferritic stainless steel, may be martensitic stainless steel, may be austenitic stainless steel, may be a duplex ferritic-martensitic stainless steel, or may be a duplex ferritic-austenitic stainless steel.

In the present embodiment, the thickness of the stainless steel substrate is not particularly limited and may be, for example, 5 to 80 µm. As described above, as used in the present description, the term "steel foil" means a steel sheet having a thickness of 150 µm or less. In other words, in the stainless steel foil according to the present embodiment, the thickness of the stainless steel foil is 150 µm or less. As described above, the stainless steel foil according to the present embodiment includes at least a stainless steel substrate and a siloxane polymer film. Therefore, if the thickness of the stainless steel substrate is 5 to 80 µm, the thickness of the stainless steel foil can be stably made 150 µm or less.

Preferably, the thickness of the stainless steel substrate according to the present embodiment is 5 to 60 µm, more preferably is 5 to 50 µm, further preferably is 5 to 35 µm, and further preferably is 5 to 20 µm. If the thickness of the stainless steel substrate is 5 µm or more, a stainless steel substrate having a stable thickness can be stably produced. On the other hand, if the thickness of the stainless steel substrate is 20 µm or less, the rigidity of the stainless steel substrate will decrease and the deformation resistance of the stainless steel foil can be reduced. Therefore, in the present embodiment, preferably the thickness of the stainless steel substrate is set within the range of 5 to 20 µm. In such a case, stable production and ease of deformation can both be achieved.

### [Siloxane polymer film]

The stainless steel foil according to the present embodiment includes a siloxane polymer film formed on at least one surface of the stainless steel substrate. A siloxane polymer film has excellent insulating ability, excellent heat resistance, excellent chemical stability, and excellent flatness. Therefore, by forming a siloxane polymer film on a surface of the stainless steel substrate, the performance required as a substrate of a deformable thin electronic device can be imparted to the stainless steel foil.

In the present embodiment, a siloxane polymer film may be formed on both sides of the stainless steel substrate, or may be formed on only one side of the stainless steel substrate. Further, as used in the present description, the term "siloxane polymer film" means a film having siloxane bonds developed into a three-dimensional network structure as a main skeleton. That is, in the present embodiment, in the siloxane polymer film, a part of the siloxane bonds that are the main skeleton may be replaced with a functional group (organic group) or another atom.

In the present embodiment, preferably the siloxane polymer film is composed of a polymer in which some bridging oxygen atoms in the siloxane skeleton are replaced with an organic group. In other words, preferably the oxygen concentration [O] (mol/L) and the silicon concentration [Si] (mol/L) in the siloxane polymer film satisfy the expression 2.5 < [O]/[Si] < 3.9. In this case, the toughness of the siloxane polymer film increases, and the durability against bending stress increases further. In addition, the term "organic group" in the siloxane polymer film refers to one type or more selected from alkyl groups, phenyl groups, and amino groups.

In the present embodiment, although not particularly limited, the thickness of the siloxane polymer film is, for example, 0.3 to 5.0 µm. Here, in the stainless steel foil according to the present embodiment, a first region and a second region are included in the siloxane polymer film. That is, the term "thickness of the siloxane polymer film" means the sum of the thicknesses of the first region and the second region. Furthermore, as used herein, the phrase "thickness of the siloxane polymer film" means the thickness of a siloxane polymer film formed on one side of the stainless steel substrate. That is, in a case where a siloxane polymer film is formed on both sides of the stainless steel substrate, the total of the thicknesses of the siloxane polymer films may be 0.6 to 10.0 µm.

If the thickness of the siloxane polymer film is less than 0.3 µm, the aforementioned insulating ability, heat resistance, and flatness may not be sufficiently obtained. On the other hand, if the thickness of the siloxane polymer film is more than 5.0 µm, the toughness of the siloxane polymer film may decrease and durability against bending stress may not be obtained. Further preferably, the thickness of the siloxane polymer film is 0.5 to 3.0 µm. In such a case, the stainless steel foil has excellent insulating ability.

In the present embodiment, the thickness of the siloxane polymer film is measured using a scanning electron microscope (SEM). A cross-section of the stainless steel foil in which the siloxane polymer film is formed is prepared using a cross-section polishing method. The formed cross-section is observed using an SEM. The thickness of the siloxane polymer film is measured based on the obtained observation image.

### [First region]

The siloxane polymer film according to the present embodiment includes a first region formed on a surface of the stainless steel substrate, and a second region formed on a surface of the first region. The first region according to the present embodiment contains, in atomic percent, Si: 5 to 30% and Fe: 5 to 45%. In the present embodiment, elements other than Si and Fe are also contained in the first region. For example, O, Cr, C, and N or the like can also be contained in the first region. Note that, the content of an element other than Si and Fe in the first region is not particularly limited.

The Fe contained in the first region may be incorporated in the first region using any method. For example, the first region may be formed as a result of Fe being diffused from the stainless steel substrate into the siloxane polymer film. In a case where Fe diffuses from the stainless steel substrate into the siloxane polymer film, Cr contained in the stainless steel substrate may also be diffused. That is, in the first region, Cr may be contained in a part of the interface with the stainless steel substrate. Even in such a case, the advantageous effect of increasing the durability of the stainless steel foil against bending stress that is achieved by virtue of the first region is not lost.

As mentioned above, it is believed that the siloxane polymer film and the Cr element in chromium oxyhydroxide form Cr-O-Si bonds. On the other hand, in the stainless steel foil according to the present embodiment, a first region having an Fe content of 5 to 45% in atomic percent is formed in the siloxane polymer film. The present inventors surmise that, as a result, the adhesion of the siloxane polymer film to the stainless steel substrate is further enhanced, and thus the durability against bending stress is further increased.

In the present embodiment, it suffices that the first region is formed even to a small extent, and the thickness of the first region is not particularly limited. However, the thickness of the first region for more effectively obtaining the aforementioned advantageous effect is 2 to 100 nm. If the first region has a thick thickness, the durability of the stainless steel foil against repeated bending will further increase. Therefore, a preferable lower limit of the thickness of the first region is 3 nm, more preferably is 5 nm, further preferably is 8 nm, and further preferably is 10 nm. On the other hand, if the thickness of the first region is too thick, the color of the siloxane polymer film may change. Therefore, a preferable upper limit of the thickness of the first region is 80 nm.

The thickness of the first region can be determined by the following method. The stainless steel foil according to the present embodiment is cut to obtain an observation surface that includes the thickness direction of the siloxane polymer film. Specifically, a test specimen is prepared by a microsampling method using a focused ion beam (FIB) apparatus. The size of the test specimen is set to, for example, 10 µm on each side, with a thickness of 100 nm. As the FIB apparatus, for example, an apparatus with the model name "NB5000" manufactured by Hitachi High-Tech Corporation can be used.

The observation surface of the prepared test specimen is observed using a transmission electron microscope (TEM), and an interface between the stainless steel substrate and the siloxane polymer film is identified at five locations, and these are designated as measurement points. Although the five measurement points are not particularly limited, measurement points that are separated by 2 µm or more from each other are to be identified. As the TEM, for example, a spherical aberration corrected transmission electron microscope (CS-TEM) NEOARM manufactured by JEOL Ltd. can be used. The accelerating voltage for the TEM observation is to be set to 200 kV. An interface between the stainless steel substrate and the siloxane polymer film can be identified based on contrast.

Rectangular continuous analysis is performed in the vicinity of the identified measurement points by energy dispersive X-ray spectrometry (EDS). The term "rectangular continuous analysis" means arranging a plurality of rectangular analysis regions side by side and performing elemental analysis continuously for the respective rectangular analysis regions. Specifically, in the observation field of each identified measurement point, rectangular analysis regions with dimensions of 1 nm in the direction perpendicular to the surface of the stainless steel substrate and 10 nm in the horizontal direction are identified. The rectangular analysis regions are arranged in the vertical direction so as to include the siloxane polymer film from the stainless steel substrate. Although not particularly limited, the number of rectangular analysis regions is, for example, 20 regions.

The rectangular analysis regions are subjected to elemental analysis performed by integrating characteristic X-ray spectral intensities generated when an electron beam focused to a diameter φ of approximately 0.1 nm is scanned within the measurement area. Because the elemental analysis is performed continuously across the plurality of rectangular analysis regions, measurement is performed while applying drift correction based on images. Note that, the elemental analysis is performed for quantification of Si, O, Fe, Cr, Ni, Cu, Mn, and Mo as elements to be analyzed. With regard to C, because the quantitative accuracy is poor and there are also concerns about the influence of contamination and the like, C is excluded from the elements to be analyzed. The content of Si (at%) and the content of Fe (at%) are determined based on the obtained results of the elemental analysis. Based on the obtained results, rectangular analysis regions in which a condition that Si is 5 to 30% and Fe is 5 to 45% is satisfied are identified as belonging to the first region. The thickness (nm) of the first region at the measurement point in question is defined based on the number of rectangular analysis regions belonging to the first region. The thickness (nm) of the first region at each of the five measurement points is measured in a similar manner. The arithmetic average value of the thicknesses of the first region obtained at the five measurement points is defined as the thickness (nm) of the first region. Note that, in a case where the first region is thick and the thickness of the first region cannot be measured accurately within the observation field, the thickness of the first region is determined by combining a plurality of observation fields. In such a case, the thickness of the first region is determined by arranging a large number of rectangular analysis regions using a plurality of observation fields. Determining the thickness of the first region based on a plurality of observation fields is possible for a person having ordinary skill in the art.

### [Second region]

The siloxane polymer film according to the present embodiment includes the first region that is formed on a surface of the stainless steel substrate, and a second region that is formed on a surface of the first region. As described above, the first region according to the present embodiment contains, in atomic percent, Si: 5 to 30% and Fe: 5 to 45%. That is, in the present embodiment, the term "second region" means the region other than the first region in the siloxane polymer film. Specifically, the second region according to the present embodiment is a region that contains, in atomic percent, Si: 5% or more and Fe: 0 to less than 5%, or a region that contains, in atomic percent, Si: 30% or more and Fe: 45% or less. In the second region, the content of Fe may be 0%.

Note that, similarly to the first region, elements other than Si and Fe can also be contained in the second region. Specifically, O, C, and N and the like can be contained in the second region. Note that, the content of an element other than Si and Fe in the second region is not particularly limited.

Further, in the present embodiment, the siloxane polymer film is identified by the following method. Crystal structure analysis by selected area electron diffraction using a TEM is performed. For example, a 200-kV field emission transmission electron microscope JEM-2100F manufactured by JEOL Ltd. can be used as the TEM. In the selected area electron diffraction, a selected area aperture is inserted to set the observation field to 3 nm, and a diffraction pattern is obtained based on an electron diffraction method. In addition, elemental analysis of the area of the selected area is performed by EDS to identify the elements present within the area. In a case where the siloxane polymer film is included at a measurement point, a pattern characteristic of an amorphous material (a so-called "halo pattern") is observed in the obtained diffraction pattern. In addition, at the aforementioned measurement points, Si and O are detected by performing elemental analysis of the area of the selected area by EDS. Based on these results, the presence of a siloxane polymer film can be identified.

In addition, in the present embodiment, an organic group in the siloxane polymer film is identified by the following method. Specifically, an absorption spectrum is obtained by Fourier transform infrared spectroscopy (FT-IR). FT-IR can be performed using, for example, an infrared spectrophotometer with the model name "Frontier" manufactured by PerkinElmer Japan G.K. More specifically, an infrared absorption spectrum is obtained from the surface of the siloxane polymer film using the attenuated total reflection (ATR) method. In a case where, as a result, for example, an absorption peak of Si-CH₃ is observed near 1263 cm⁻¹, it can be determined that the siloxane polymer film has a methyl group as an organic group. Similarly, for example, if an absorption peak of Si-C₆H₅ is observed near 1630 cm⁻¹, it can be determined that the siloxane polymer film has a phenyl group as an organic group. Thus, it is naturally possible for a person having ordinary skill in the art to identify organic groups based on the infrared absorption spectrum of the surface of the siloxane polymer film.

### [Durability against bending stress]

The stainless steel foil according to the present embodiment includes a stainless steel substrate, and a siloxane polymer film formed on at least one surface of the stainless steel substrate, with the siloxane polymer film including a first region that is formed on a surface of the stainless steel substrate, and a second region that is formed on a surface of the first region, and in which the first region contains, in atomic percent, Si: 5 to 30% and Fe: 5 to 45%. As a result, the stainless steel foil according to the present embodiment has excellent durability against bending stress. In the present embodiment, excellent durability against bending stress is defined as follows.

A repeated bend test is performed on the stainless steel foil according to the present embodiment. Specifically, a test specimen is prepared from the stainless steel foil according to the present embodiment. The size of the test specimen is to be set to 50 mm × 100 mm. The prepared test specimen is placed in a clamshell bending tester. For example, a testing device with the model name DR11MR manufactured by YUASA SYSTEM Co., Ltd. can be used as the clamshell bending tester. Regarding the test conditions, taking the bend radius of the stainless steel foil as "R" and the thickness of the stainless steel foil as "t", the bend radius is to be set so that R/t = 150. Further, the bending angle is to be set within the range of 0 to 180°. Here, R/t is a dimensionless quantity in which the units of the numerator and the denominator are the same, and is an index indicating the severity of bending considering stress and strain that the material receives. Even in a case where R is the same, the stress and strain that the material receives increase as the thickness t of the material increases.

Under the conditions described above, the number of repeated bends until a crack occurs in the siloxane polymer film surface is defined as the number of bending cycles. If the number of bending cycles according to the above definition is 5000 cycles or more, it is determined that the stainless steel foil has excellent durability against bending stress. Furthermore, if the number of bending cycles is 20000 cycles or more, it is determined that the stainless steel foil has even more excellent durability against bending stress.

### [Method for producing stainless steel foil]

One example of a method for producing the stainless steel foil according to the present embodiment will now be described. The production method described below is one example for producing the stainless steel foil according to the present embodiment, and the method for producing the stainless steel foil according to the present embodiment may be a production method other than the production method described below. However, the production method described below is a preferred example of a method for producing the stainless steel foil according to the present embodiment. The method for producing the stainless steel foil according to the present embodiment includes a substrate preparation process, an application process, a diffusion preparation process, and a heat treatment process.

### [Substrate preparation process]

In the substrate preparation process, a stainless steel substrate that is the substrate of the stainless steel foil is prepared. The method for preparing the stainless steel substrate is not particularly limited, and it suffices that a well-known method is used. As the method for preparing the stainless steel substrate, for example, an intermediate steel material having a desired chemical composition may be prepared, and the intermediate steel material may be subjected to cold working. Hereinafter, this case is specifically described.

The intermediate steel material having a desired chemical composition can be appropriately selected according to the mechanical properties of the stainless steel substrate to be obtained. Here, the term "intermediate steel material" means a stainless steel sheet having a thickness of several hundred µm to several mm. In the case of preparing the stainless steel substrate by subjecting an intermediate steel material to cold working, a preferable cold working is cold rolling. The cold rolling can be performed using well-known equipment. For example, a plurality of reversible cold rolling mills may be used. In this case, the reduction rate in the cold rolling is not particularly limited. An appropriate reduction rate can be set according to the thickness of the stainless steel substrate to be obtained. Further, the stainless steel substrate after cold rolling may be subjected to an appropriate heat treatment.

As described above, the stainless steel substrate is prepared in the substrate preparation process. The stainless steel substrate may be produced by the aforementioned preferable process, or may be a stainless steel substrate produced by a third party, or may be a stainless steel substrate that is prepared by being produced in another factory other than the factory where the application process be described later is performed or at a different place of business. In short, the substrate preparation process in the present embodiment is not particularly limited, and it suffices that it is a well-known method.

### [Application process]

In the application process, a composition for a siloxane polymer film is applied to the prepared stainless steel substrate. The composition for the siloxane polymer film can be prepared according to the siloxane polymer film to be obtained. For example, the composition may be prepared by diluting one or more organoalkoxysilanes with an organic solvent and performing hydrolysis. Here, the organoalkoxysilane is represented by the general formula RₙSi(OR')₄₋ₙ (where R and R' are hydrogen atoms and/or organic groups, and n is a natural number equal to or less than 3).

In a case where the composition is prepared by the method described above, the organoalkoxysilane can be selected according to the siloxane polymer film to be obtained. For example, one or more types selected from diethoxydimethylsilane, dimethoxydimethylsilane, methyltrimethoxysilane, methyltriethoxysilane, ethyltrimethoxysilane, ethyltriethoxysilane, propyltrimethoxysilane, propyltriethoxysilane, isobutyltrimethoxysilane, isobutyltriethoxysilane, dimethoxymethyl-3,3,3-trifluoropropylsilane, diisobutyldimethoxysilane, trimethylmethoxysilane, dimethoxydimethylsilane, diethoxydimethylsilane, phenyltriethoxysilane, methacryloxypropyltrimethoxysilane, methacryloxypropyltriethoxysilane, aminopropyltriethoxysilane, and aminoethylaminopropyltriethoxysilane can be used. Preferably, an organic group contains a methyl group, an ethyl group or a phenyl group. In such case, the thermal decomposition temperature of the organoalkoxysilane will increase and it will be easier to control the amount of residual organic groups after the heat treatment process.

The method for applying the composition is not particularly limited, and it suffices to use a well-known method. For example, the composition may be applied using a bar coater, may be applied using a roll coater, may be applied by a spraying method, may be applied by dipping, or may be applied by a spin coating method. In this case, an appropriate solvent can be selected and used depending on the application method. Further, the thickness of the siloxane polymer film in the produced stainless steel foil can be appropriately adjusted by appropriately adjusting the application amount during the application process.

In the application process according to the present embodiment, in addition, the applied composition is dried. Specifically, it is preferable to dry the applied composition by performing low-temperature heating at approximately 100 to 180°C in the atmosphere. Note that, although not particularly limited, the drying time is, for example, 0.5 to 30 minutes. By performing the above processes, the composition is applied to the prepared stainless steel substrate and dried.

### [Diffusion preparation process]

In the diffusion preparation process, a heat treatment for diffusion preparation is performed on the stainless steel substrate to which the composition has been applied. The term "diffusion" as used herein means causing Fe in the stainless steel substrate to diffuse through the composition. Specifically, in the diffusion preparation process, the stainless steel substrate to which the composition has been applied is held at a temperature of 40 to 80°C and a humidity of 60 to 100% for a period of 10 to 30 days. There is a possibility that when held under a high humidity environment, Cr ions in the passivation film (chromium oxyhydroxide) that is formed on the surface of the stainless steel substrate form chelates with residual acid catalyst in the applied composition. There is a possibility that, as a result, the passivation film is broken and consequently it becomes easy for Fe ions to leach from the stainless steel substrate.

That is, by facilitating the diffusion of Fe in advance in the diffusion preparation process, the first region can be stably formed in the heat treatment process that is described later. Accordingly, in the present embodiment, as the diffusion preparation process, it is preferable that the stainless steel substrate to which the composition has been applied is held at a temperature of 40 to 80°C and a humidity of 60 to 100% for a period of 10 to 30 days.

### [Heat treatment process]

In the heat treatment process, the stainless steel substrate to which the composition has been applied is subjected to a heat treatment to cure the siloxane polymer film. In the heat treatment process according to the present embodiment, preferably the stainless steel substrate is held at a temperature of 350 to 500°C for 5 to 300 minutes. In the heat treatment process, the first region is formed at the same time as the siloxane polymer film is cured.

As described above, in the stainless steel substrate subjected to the diffusion preparation process, it is easy for Fe ions to leach from the passivation film. Therefore, in the heat treatment process, Fe ions that have leached from the passivation film diffuse into the siloxane polymer film. Based on the above surmise, it is considered that the first region is formed in the siloxane polymer film by the heat treatment process. Therefore, a higher heat treatment temperature and longer heat treatment time will tend to result in the first region being thickly formed.

The stainless steel foil according to the present embodiment can be produced by performing the above processes. Note that, as mentioned above, the production process described above is one preferable example for producing the stainless steel foil according to the present embodiment, and a method for producing the stainless steel foil according to the present embodiment is not limited to the method described above. Hereinafter, the stainless steel foil according to the present embodiment will be described more specifically by way of examples.

### EXAMPLES

Stainless steel substrates of respective test numbers having a thickness shown in Table 1 were prepared. Note that, the steel type of the stainless steel substrate of each test number corresponded to either ferritic stainless steel equivalent to SUS 444 defined in JIS G 4305(2012) or austenitic stainless steel equivalent to SUS 304 defined in JIS G 4305(2012).

### [Table 1]

**TABLE 1**

| Test Number | Stainless Steel Substrate | | Composition | Diffusion Preparation Process | Heat Treatment Conditions | | |
|---|---|---|---|---|---|---|---|
| | Steel Type | Thickness (µm) | | | Atmosphere | Temperature (°C) | Time (mins) |
| 1 | SUS444 | 10 | A | A | A | 400 | 1 |
| 2 | SUS444 | 10 | A | A | A | 400 | 3 |
| 3 | SUS444 | 10 | A | A | A | 420 | 2 |
| 4 | SUS444 | 10 | A | A | A | 420 | 3 |
| 5 | SUS444 | 10 | A | A | A | 420 | 10 |
| 6 | SUS444 | 10 | A | A | A | 420 | 30 |
| 7 | SUS444 | 10 | A | A | A | 420 | 50 |
| 8 | SUS444 | 10 | A | A | A | 440 | 50 |
| 9 | SUS444 | 10 | A | A | A | 460 | 50 |
| 10 | SUS444 | 10 | A | A | A | 420 | 3 |
| 11 | SUS444 | 10 | A | A | A | 420 | 3 |
| 12 | SUS444 | 25 | A | A | A | 420 | 3 |
| 13 | SUS444 | 60 | A | A | A | 420 | 3 |
| 14 | SUS444 | 60 | A | A | A | 420 | 3 |
| 15 | SUS444 | 10 | A | A | A | 420 | 3 |
| 16 | SUS304 | 10 | A | A | A | 420 | 3 |
| 17 | SUS444 | 10 | B | A | A | 420 | 3 |
| 18 | SUS444 | 10 | A | B | A | 420 | 3 |
| 19 | SUS444 | 10 | A | C | A | 420 | 3 |
| 20 | SUS444 | 10 | A | - | B | 420 | 3 |

A composition described in Table 1 was applied to the stainless steel substrate of each test number. Composition "A" was prepared by dropwise adding a hydrolysis solution made by mixing 0.3 g of acetic acid and 35 g of water to a mixture of 89 g of methyltriethoxysilane, 76 g of tetramethoxysilane, and 67 g of 2-ethoxyethanol over a period of two to three hours. Composition "B" was prepared by dropwise adding a hydrolysis solution made by mixing 0.3 g of acetic acid and 35 g of water to a mixture of 120 g of phenyltriethoxysilane and 65 g of ethanol over a period of two to three hours.

Application of the composition was performed by the following method. Specifically, the composition was dropped onto the stainless steel substrate of each test number, and thereafter the stainless steel substrate was rotated at a speed of 400 rpm using a spin coating method. The stainless steel substrate of each test number to which the composition had been applied was then heated in a heat treatment furnace at 150°C for one minute to dry the composition. Hereinafter, the dried composition is also referred to as "dried film".

The stainless steel substrate with a dried film of each test number was subjected to a diffusion preparation process under the conditions shown in Table 1. In diffusion preparation process "A", the stainless steel substrate was held for 10 days at a temperature of 40°C and a humidity of 80%. In diffusion preparation process "B", the stainless steel substrate was held for 10 days at a temperature of 30°C and a humidity of 10%. In diffusion preparation process "C", the stainless steel substrate was held for one day at a temperature of 40°C and a humidity of 60%. The symbol "-" with respect to the diffusion preparation process means that the diffusion preparation process was not performed.

In addition, the stainless steel substrate with a dried film of each test number was subjected to a heat treatment under the heat treatment conditions shown in Table 1. Atmosphere "A" means an atmosphere with an oxygen concentration of 300 to 1000 ppm, with the balance being nitrogen and impurities. Atmosphere "B" means an atmosphere containing hydrogen with an oxygen concentration of 0 ppm, with the balance being nitrogen and impurities. The stainless steel substrates were held under these atmospheres at the temperature (°C) shown in Table 1 for the time (mins) shown in Table 1.

### [Evaluation tests]

A stainless steel foil of each test number was produced by the above process. The produced stainless steel foil of each test number was subjected to a siloxane polymer film thickness measurement test, a first region thickness measurement test, a repeated bend test, an insulation property test, a deformability test, and a color test.

### [Siloxane polymer film thickness measurement test]

The siloxane polymer film thickness of the stainless steel foil of each test number was measured using an SEM. A cross-section of the stainless steel foil of each test number was formed using a cross-section polishing method. The formed cross-section was observed using an SEM. The thickness of the siloxane polymer film was measured based on an obtained observation image. The thickness of the obtained siloxane polymer film is shown in Table 2.

### [Table 2]

**TABLE 2**

| Test Number | Siloxane Polymer Film | First Region Thickness (nm) | Repeated Bend Test | Insulation Property Test | Deformability Test | Color Test |
|---|---|---|---|---|---|---|
| | Thickness (µm) | | | | | |
| 1 | 0.5 | 3 | G | E | E | E |
| 2 | 0.5 | 5 | G | E | E | E |
| 3 | 0.5 | 8 | E | E | E | E |
| 4 | 0.5 | 10 | E | E | E | E |
| 5 | 0.5 | 20 | E | E | E | E |
| 6 | 0.5 | 30 | E | E | E | E |
| 7 | 0.5 | 50 | E | E | E | E |
| 8 | 0.5 | 70 | E | E | E | E |
| 9 | 0.5 | 90 | E | E | E | G |
| 10 | 1.5 | 10 | E | E | E | E |
| 11 | 3.0 | 10 | E | E | E | E |
| 12 | 0.5 | 10 | E | E | E | E |
| 13 | 0.5 | 10 | E | E | G | E |
| 14 | 3.0 | 10 | E | E | G | E |
| 15 | 0.4 | 10 | E | G | E | E |
| 16 | 0.5 | 10 | E | E | E | E |
| 17 | 0.5 | 10 | E | E | E | E |
| 18 | 1.5 | 0 | NA | E | E | E |
| 19 | 1.5 | 0 | NA | E | E | E |
| 20 | 1.5 | 0 | NA | E | E | E |

### [First region thickness measurement test]

In the stainless steel foil of each test number, the thickness of the first region was measured by the method described above. On an observation surface obtained by the method described above, measurement points were identified at five locations. Note that, the measurement points were identified at positions that were separated by 2 µm or more from each other. Rectangular continuous analysis was performed by the method described above. Specifically, 20 rectangular analysis regions that each had dimensions of 1 nm in the direction perpendicular to the surface of the stainless steel substrate and 10 nm in the horizontal direction were arranged side by side in the vertical direction so as to include the siloxane polymer film from the stainless steel substrate. Elemental analysis was performed by integrating characteristic X-ray spectral intensities generated when an electron beam focused to a diameter φ of approximately 0.1 nm was scanned within the measurement area. The thickness (nm) of the first region at each measurement point was determined based on the number of rectangular analysis regions where the content of Si and content of Fe obtained by the elemental analysis satisfied a condition that, in atomic percent, Si: 5 to 30% and Fe: 5 to 45%. The arithmetic average value of the thicknesses of the first region obtained at the five measurement points was determined as the thickness (nm) of the first region. The obtained thickness (nm) of the first region is shown in Table 2.

### [Repeated bend test]

The stainless steel foil of each test number was subjected to a repeated bend test. A test specimen with dimensions of 50 mm × 100 mm was prepared by the method described above. The prepared test specimen was placed in a clamshell bending tester. A testing device with the model name DR11MR manufactured by YUASA SYSTEM Co., Ltd. was used as the clamshell bending tester. Regarding the test conditions, taking the bend radius of the stainless steel foil as "R" and the thickness of the stainless steel foil as "t", the bend radius was set so that R/t = 150.

Under the conditions described above, the number of repeated bends until a crack occurred on the siloxane polymer film surface was defined as the number of bending cycles. If the number of bending cycles according to the above definition was less than 50,000 cycles, it was determined that the stainless steel foil did not have excellent durability against bending stress ("NA (Not Acceptable)" in Table 2). If the number of bending cycles was in the range of 50,000 to less than 200,000 cycles, it was determined that the stainless steel foil had excellent durability against bending stress ("G (Good)" in Table 2). Furthermore, if the number of bending cycles was 200,000 cycles or more, it was determined that the stainless steel foil had even more excellent durability against bending stress ("E (Excellent)" in Table 2).

### [Insulation property test]

The insulating ability of the siloxane polymer film of the stainless steel foil of each test number was evaluated. Specifically, using an ion coater, a 1 mm diameter-sized platinum (Pt) film was deposited on the siloxane polymer film of each test number to form an electrode. A voltage of 100 V was applied between the electrode and the stainless steel substrate, and the leakage current value was measured. Measurement points where the leakage current value was 10 mA or more were determined to be short-circuited. Among 10 measurement points, if four or more measurement points were determined to be short-circuited, it was determined that the stainless steel foil did not have excellent insulating ability ("NA (Not Acceptable)" in Table 2). Among 10 measurement points, if two or three measurement points were determined to be short-circuited, it was determined that the stainless steel foil had excellent insulating ability ("G (Good)" in Table 2). Furthermore, among 10 measurement points, if one or less measurement point was determined to be short-circuited, it was determined that the stainless steel foil had even more excellent insulating ability ("E (Excellent)" in Table 2).

### [Deformability test]

The deformability of the stainless steel foil of each test number was evaluated. Specifically, a test specimen of 100 mm in length and 50 mm in width was cut out from the stainless steel foil of each test number. One short side of the test specimen of each test number was fixed and held horizontally. The test specimen of each test number was observed from the side, and the difference in height (amount of sag) between the unfixed short side and the fixed short side was measured. If the amount of sag was less than 10 mm, it was determined that the stainless steel foil did not have excellent deformability ("NA (Not Acceptable)" in Table 2). If the amount of sag was 10 to less than 50 mm, it was determined that the stainless steel foil had excellent deformability ("G (Good)" in Table 2). Furthermore, if the amount of sag was 50 mm or more, it was determined that the stainless steel foil had even more excellent deformability ("E (Excellent)" in Table 2).

### [Color test]

A color test was performed on the stainless steel foil of each test number. Specifically, image analysis was performed on an image of the siloxane polymer film of the stainless steel foil of each test number to convert the color into a numerical value. More specifically, the siloxane polymer film of the stainless steel foil of each test number was scanned with a scanner to generate an electronic data image. The scanner used was a machine with the model name TS8330 manufactured by Canon Inc. Note that, scanning with the scanner was performed in a state in which a gap of 1 to 2 mm was provided between the glass surface (platen) of the scanner and the siloxane polymer film. The obtained image was subjected to image analysis using Image J software to convert the color into a numerical value in the L*a*b* color space. If the obtained a* value and b* value satisfied the relational expression b* ≤ a*-20, it was determined that the stainless steel foil did not have an excellent color ("NA (Not Acceptable)" in Table 2). If the obtained a* value and b* value satisfied the relational expression b* > a*-20, it was determined that the stainless steel foil had an excellent color ("G (Good)" in Table 2). If the obtained a* value and b* value satisfied the relational expression b* > a*-10, it was determined that the stainless steel foil had an even more excellent color ("E (Excellent)" in Table 2).

### [Evaluation results]

The stainless steel foils of Test Nos. 1 to 17 contained a stainless steel substrate, a siloxane polymer film formed on one surface of the stainless steel substrate, and a first region that was included in the siloxane polymer film. As a result, for these stainless steel foils, the number of bending cycles in the repeated bend test was 50,000 cycles or more, and thus these stainless steel foils had excellent durability against bending stress.

Furthermore, in the stainless steel foils of Test Nos. 3 to 17, the thickness of the first region was 8 nm or more. As a result, for these stainless steel foils, the number of bending cycles in the repeated bend test was 200,000 cycles or more, and thus these stainless steel foils had even more excellent durability against bending stress.

In addition, in the stainless steel foils of Test Nos. 1 to 8 and 10 to 17, the thickness of the first region was 80 nm or less. As a result, these stainless steel foils had an even more excellent color in the color test.

Further, in the stainless steel foils of Test Nos. 1 to 14 and 16 and 17, the thickness of the siloxane polymer film was 0.5 µm or more. As a result, these stainless steel foils had even more excellent insulating ability in the insulation property test.

Furthermore, in the stainless steel foils of Test Nos. 1 to 12 and 15 to 17, the thickness of the stainless steel substrate was 30 µm or less. As a result, these stainless steel foils had even more excellent deformability in the deformability test.

On the other hand, the stainless steel foils of Test Nos. 18 to 20 were not subjected to the preferred diffusion preparation process described above. As a result, although these stainless steel foils contained a stainless steel substrate and a siloxane polymer film that was formed on one surface of the stainless steel substrate, a first region was not included in the siloxane polymer film. As a result, the number of bending cycles in the repeated bend test was less than 50,000 cycles, and thus these stainless steel foils did not have excellent durability against bending stress.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

## Claims

1. A stainless steel foil, comprising:
a stainless steel substrate, and
a siloxane polymer film formed on at least one surface of the stainless steel substrate,
wherein:
the siloxane polymer film includes:
a first region formed on a surface of the stainless steel substrate; and
a second region formed on a surface of the first region, and
the first region contains, in atomic percent:
Si: 5 to 30% and Fe: 5 to 45%.

2. The stainless steel foil according to claim 1, wherein:
a thickness of the first region is 2 to 100 nm.

3. The stainless steel foil according to claim 1, wherein:
a thickness of the siloxane polymer film is 0.3 to 5.0 µm.

4. The stainless steel foil according to claim 2, wherein:
a thickness of the siloxane polymer film is 0.3 to 5.0 µm.

5. The stainless steel foil according to any one of claim 1 to claim 4, wherein:
a thickness of the stainless steel substrate is 5 to 80 µm.
